Europäisches Patentamt

(19) European Patent Office

Office européen des brevets

(11) **EP 0 667 282 B1**

(12) **EUROPEAN PATENT SPECIFICATION**

(45) Date of publication and mention
of the grant of the patent:
**09.06.1999 Bulletin 1999/23**

(51) Int. Cl.⁶: **B63B 1/38**

(86) International application number:
**PCT/RU93/00278**

(21) Application number: **94903174.4**

(22) Date of filing: **18.11.1993**

(87) International publication number:
**WO 95/07210 (16.03.1995 Gazette 1995/12)**

(54) **HIGH-SPEED BOAT**

SCHNELLBOOT

BATEAU RAPIDE

(84) Designated Contracting States:
**DE DK ES FR GB GR IT SE**

(30) Priority: **08.09.1993 RU 93043823**

(43) Date of publication of application:
**16.08.1995 Bulletin 1995/33**

(73) Proprietor:
**Tovarischestvo S Organichennoi
Otvetstvennostju "Bjuro Skorostnykh Sudov"
Nizhny Novgorod, 603003 (RU)**

(72) Inventors:
• **CHABAN, Jury Vsevolodovich
Nizhny Novgorod, 603045 (RU)**
• **MATVEEV, Ivan Ivanovich
Nizhny Novgorod, 603003 (RU)**
• **ROGOZHKIN, Sergei Yakovlevich
Nizhny Novgorod, 603037 (RU)**
• **MATVEEV, Ilya Ivanovich
Nizhny Novgorod, 603094 (RU)**
• **EZHOV, Mikhail Vladimirovich
Nizhny Novgorod, 603032 (RU)**

(74) Representative:
**W.P. Thompson & Co.
Coopers Building,
Church Street
Liverpool L1 3AB (GB)**

(56) References cited:
EP-A- 0 088 640          WO-A-85/00332
SU-A- 318 501            US-A- 3 547 064
US-A- 3 726 246          US-A- 4 165 703
US-A- 4 392 445

## Description

## TECHNICAL FIELD

The present invention relates in general to ship-building and more specifically to the construction of a high-speed vessel.

## BACKGROUND ART

Present day ship-building practice is featured by a widespread application of high-speed vessels having special devices aimed at a considerable increase in their speed on water. The most efficient way to reduce resistance offered to vessel motion is to supply a gas under the bottom of the hull, and this can be effected by the most diverse methods. Presently quite a number of technical solutions aimed at controlled supply of a gas through holes in the hull bottom, are known and used.

For instance, PCT Patent (WO) # 88/00904 discloses a vessel, wherein streams of compressed air are fed through a pair of similar straight parallel ducts which are open from below and located underneath the hull. When the vessel is on the run the hull is kept horizontal due to the air thrust developed by the air ducts. The gas delivery holes are controlled by transfer valves aimed at changing the rate of gas feed, thereby adjusting vessel maneuverability. Such a vessel construction reduces its friction against water during motion and hence adds to the vessel speed. On the other hand, it is, however, noteworthy that the arrangement of the ducts on the hull bottom proposed in said technical solution, fails to a great extent to increase the vessel speed because the ducts are provided on only part of the hull bottom surface, leaving large areas of the bottom of the hull in contact with water.

Also known in the art, are technical solutions that reduce the bottom-to-water contact area due to the provision of parallel air supply ducts over the entire surface of the hull bottom. However, such a solution also fails to adequately reduce the resistance to vessel motion because the partitions between ducts offer additional resistance (US, A, 4,603,650).

A better method for increasing the vessel speed characteristics is to provide a recess in the hull bottom rather than air ducts, the recess being likewise filled with a gas. US Patent A # 4,578,918 discloses the construction of a high-speed hull construction featuring a lower resistance offered to vessel motion. The hull of said vessel has bilges, with catamaran-type side stabilizing skegs whose front portions extend downwards from the surface of the main hull. The hull bottom has a recess to which a compressed gas is fed through one or more holes so as to act upon the lifting hull surface. The major portion of the recess is overlapped athwartwise by additional fairly rigid gastight bow element having one or more of its surfaces shaped partly curvilinearly. However, provision of an indeterminately shaped recess having no clearly defined length/width ratios impedes one from attaining, to the fullest extent, smooth vessel running on high seas with high hydrodynamic characteristics.

Known in the present state of the art is the construction of a high-speed passenger vessel "Linda" now under serial production schedule, described in the Janes Reference Book, 1992/1993 Issue, p.334. The vessel comprises a hull with bilges and a bottom wherein a recess is formed, the recess communicating with a compressed-air source and being defined peripherally by gliding portions of the bottom with stall-forming edges, viz, an athwartship planing step, side skegs, and a shaped stern flat which is an extension to the bottom arch interposed between the side skegs so as to define the bottom recess as viewed from above. The hull bottom before the planing step has a cylindrical insert aimed at reducing the power consumed for compressed-air supply to the bottom recess and retaining an air cavity established therein and having the borders running along the stall-forming edges of the athwartship planing step and the side skegs. Though featuring a high lift-drag ratio, the vessel under discussion suffers, when on high seas, from the disadvantages inherent in gliding-type vessels. The forward end of the bottom of the vessel, which is situated in front of the athwart planing step and features a considerable width and minor deadrise thereon, experiences heavy impact loads when running into a wave, this resulting in a loss of speed, higher power consumption, shorter service life, and affected comfort.

An increased deadrise of the forward end of said vessel reduces the effect of the air cavity both due to a reduced lift-drag ratio and to difficulties encountered in retaining compressed air in the after-step space.

## DISCLOSURE OF THE INVENTION

The aim of the present invention is to provide a high-speed vessel having a construction of the hull bottom, which considerably improves the vessel seaworthiness characteristics due to reduced overloads when the vessel is riding out high seas, as well as decreases resistance offered to vessel motion.

According to the present invention there is provided a high-speed vessel, comprising a hull having a bow and a stern, with a keel extending therebetween and a bottom located between bilges, a source of compressed-air being arranged to supply compressed air to a recess defined peripherally by stall-forming edges of gliding portions of the bottom, characterised in that the recess in the bottom extends from the stern of the vessel towards the bow, and is defined at the front towards the bow, and on the sides, by skegs which become wider towards the front and apex of the recess in the hull bottom, said apex being formed by the intersection of the stall-forming edges of the side skegs, on the keel, and being located forward of a midship frame of the hull, the maximum width of a forward end region of the hull bottom between the bilges, being at the apex of the recess, this maximum width being smaller than the width of the hull bottom between the bilges in the plane of the midship frame.

Such a proposed vessel construction considerably reduces impact loads taken up by the vessel, thus increasing her speed and simultaneously ensuring quiet riding on high seas.

The essence of the present invention is as follows. While under way the vessel glides with certain portions of the forward end bottom, and of the side skegs, over the free water surface. Compressed air supplied to the bottom recess forms a so-called "air cavity" therein, the lower surface of said cavity being defined by the stall-forming edges of the side skegs and being in fact a fair extension to the wet gliding surfaces. In the stern portion of the recess the "air cavity" is defined by a shaped flat of the bottom arch.

When running into an oncoming wave the sharp bow outlines help the vessel cut through without undergoing considerable impact loads. In case of vertical vibrations experienced by the forward end of the vessel, the impact loads a high-speed vessel is subjected to are low due to a small area of the V-shaped bow portion of the bottom and because said loads are damped by the "air cavity" in the bottom recess.

On the other hand, provision of the "air cavity" on a considerable portion of the bottom ensures a high lift-drag ratio due to a reduced frictional drag.

Experiments have demonstrated that overloads in the vessels of the herein-proposed construction are one-third to one-half as high during vessel riding on high seas as compared with the known similar vessels, and the total resistance offered to vessel motion decreases by 30 to 40% compared with traditional seagoing vessels having a pronounced V-shape of the hull at speeds corresponding to V-Froude numbers exceeding 1.0 (Fr > 1.0), according to formula

$$Fr = V/\sqrt{g * \sqrt[3]{D}}, \text{ where:}$$

V - vessel speed;
g - free-fall acceleration;
D - vessel displacement.

## BRIEF DESCRIPTION OF THE DRAWINGS

The present invention will now be further described, by way of example, with reference to the accompanying drawings representing practical embodiments of the present invention, in which:-

FIG. 1 is a schematic plan view of the high-speed vessel, according to the present invention, in an inverted position;
FIG. 2 is a longitudinal section through the hull of the vessel of FIG. 1 and
FIG. 3 is a plan view of the bottom of the vessel of FIG. 1

## BEST METHOD OF CARRYING OUT THE PRESENT INVENTION

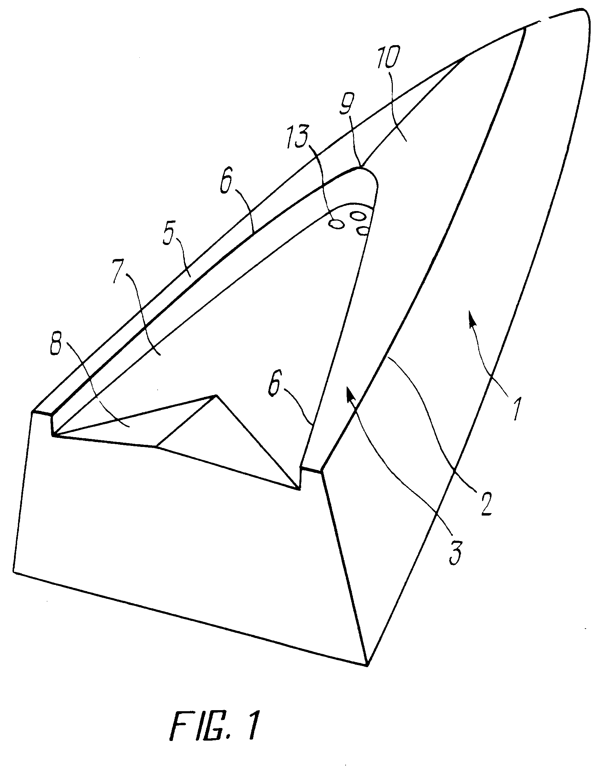

The high-speed vessel constructed according to the present invention and shown in Figs. 1 to 3 of the accompanying drawings, comprises a hull 1 with bilges 2, a recess 4 being provided in a bottom region 3 of said hull 1, said recess 4 having a length LB and being defined at the front and on the sides by skegs 5 having stall-forming edges 6, and by a bottom arch 7 interposed between the side skegs 5, which merges into a shaped stern flat 8.

The width "A" of the side skegs 5 increases from the stern of the vessel towards an apex 9 of the bottom recess 4, said apex being in fact the point of intersection of the stall-forming edges 6 of the side skegs 5 and being located in the front portion of the bottom (LB > L/2 ).

The maximum width B-B of the bottom between the bilges of the forward end 10 is in the plane of the frame passing through the apex 9 of the bottom recess 4 and this width B-B is smaller than width C-C of the bottom between the bilges in the plane of the midship frame. Also the surface of the bottom in the forward end 10 in the region of the apex 9 of the bottom recess 4, merges smoothly into the bottom portions of the side skegs 5.

The hull 1 accommodates known devices 11 for compressed-air supply to the bottom recess 4 through one or more ducts 12 and holes 13 in the bottom arch 7.

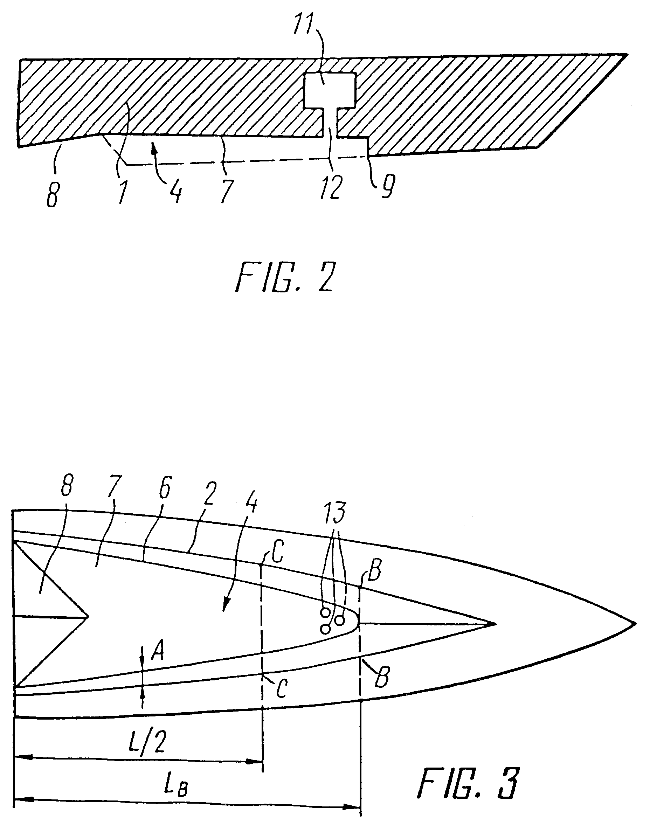

While riding over a water area at service speed the high-speed vessel glides with some portions of her bottom in water contact. Compressed air supplied through the holes 13 under the bottom arch 7, fills the recess 4 to establish an "air cavity" therein (FIG. 2 illustrating its borders with a dotted line), said cavity reducing the resistance offered to vessel motion and the impact loads thereon while on high seas. Reduced impact loads are due to a small area of the V-shaped bow portion of the bottom. The combination of the vessel constructional features adds to her speed without affecting operational comfort thereof.

## INDUSTRIAL APPLICABILITY

The herein-proposed construction of a high-speed vessel features quiet running on high seas and a high lift-drag ratio on speeds corresponding to V-Froude numbers exceeding 1.0.

Taking account of good seaworthiness of the vessel of the present invention she may be recommended for operation on any traffic lines for passenger and cargo transportation.

## Claims

1. A high-speed vessel, comprising a hull (1) having a bow and a stern, with a keel extending therebetween and a bottom (3) located between bilges (2), a source of compressed-air being arranged to supply compressed air to a recess (4) defined peripherally by stall-forming edges (6) of gliding portions of the bottom (3), characterised in that the recess (4) in the bottom (3) extends from the stern of the vessel towards the bow, and is defined at the front towards the bow, and on the sides, by skegs (5) which become wider towards the front and apex (9) of the recess (4) in the hull bottom, said apex (9) being formed by the intersection of the stall-forming edges (6) of the side skegs (5), on the keel, and being located forward of a midship frame of the hull (1), the maximum width of a forward end region (10) of the hull bottom (3) between the bilges (2), being at the apex (9) of the recess (4), this maximum width being smaller than the width of the hull bottom (3) between the bilges (2) in the plane of the midship frame.

2. A high speed vessel as claimed in claim 1, in which a shaped stern flat (8) is arranged in the recess (4) between the side skegs (5) towards the stern of the vessel.

## Patentansprüche

1. Schnelles Schiff, enthaltend einen Rumpf (1), dar einen Bug, ein Heck und einen Boden (3) besitzt, welcher zwischen Bordseiten-Kimmen (2) liegt, und eine Druckluftquelle zur Luftzuführung in eine Ausnehmung (4), die am Umfang durch ablösungsbildende Kanten (6) der gleitenden Abschnitte des Bodens (3) begrenzt ist, dadurch gekennzeichnet, daß sich die Ausnehmung (4) im Boden (3) vom Schiffsheck aus in Richtung des Bugs erstreckt und vorne in Bugrichtung und auf den Bordseiten durch feste Schürzen (5) begrenzt ist, deren Breite in Richtung nach vorn je nach der Annäherung an den Scheitelpunkt (9) der Ausnehmung (4) im Rumpfboden zunimmt, welcher von der Kreuzung der ablösungsbildenden Kanten (6) der festen Seitenschürzen (5) am Kiel gebildet ist und vor dem Hauptspant des Rumpfes (1) liegt, wobei die maximale Breite eines Bereiches des vorderen Endes (10) des Rumpfbodens (3) zwischen den Kimmen (2) auf dem Scheitelpunkt (9) der Ausnehmung (4) ausgeführt ist und die Breite des Rumpfbodens (3) zwischen den Kimmen (2) in der Hauptspantebene unterschreitet.

2. Schnelles Schiff gemäß Anspruch 1 besitzt eine profilierte Heckfläche (8), die in der Ausnehmung (4) zwischen den festen Seitenschürzen (5) in Richtung des Schiffshecks gelegen ist.

## Revendications

1. Navire rapide comportant une coque (1), ayant une proue, une arrière et un fond (3), disposé entre les bouchains de bord (2), une source d'air comprimé, destinée à amener l'air comprimé dans une cavité (4), délimitée suivant le périmètre par des bords (6), formant le décrochage, des parties de glissement du fond (3), caractérisé en ce que la cavité (4) dans le fond (3) s'étend à partir de l'arrière du navire dans la direction de la proue et est élimitée à la partie antérieure dans la direction de la proue et suivant les bords par des skegs (5), la largeur desquels croît dans le sens vers l'avant au fur et à mesure du rapprochement du sommet (9) de la cavité (4), ménagée dans le fond de la coque et formée par l'intersection des bords (6), formant le décrochage, des skegs de bord (5) sur l'arrière et située devant le maître-couple (1), la largeur maximale de l'extrémité de la proue (10) du fond de la coque (3) entre les bouchains (2) étant réalisée au sommet (9) de la cavité (4) et est inférieure à la largeur du fond (3) de la coque entre les bouchains (2) dans le plan du maître-couple.

2. Navire rapide selon la revendication 1, comporte une plate-forme arrière (8), disposée dans la cavité entre les skegs de bord (5) dans la direction de l'arrière du navire.

FIG. 1

EP 0 667 282 B1

FIG. 2

FIG. 3